Europäisches Patentamt

European Patent Office

Office européen des brevets

(19)

(11) Veröffentlichungsnummer : **0 141 978**
**B1**

(12) **EUROPÄISCHE PATENTSCHRIFT**

(45) Veröffentlichungstag der Patentschrift :
25.03.87

(51) Int. Cl.⁴ : **D 01 F   9/08**, C 01 B 31/36

(21) Anmeldenummer : 84111278.2

(22) Anmeldetag : 21.09.84

(54) Verfahren zum Herstellen von SIC-Fasern und Fasergebilden.

(30) Priorität : 19.10.83 DE 3337949

(43) Veröffentlichungstag der Anmeldung :
22.05.85 Patentblatt 85/21

(45) Bekanntmachung des Hinweises auf die Patenterteilung : 25.03.87 Patentblatt 87/13

(84) Benannte Vertragsstaaten :
AT BE CH DE FR GB IT LI LU NL SE

(56) Entgegenhaltungen :
EP-A- 0 032 097
GB-A- 2 053 873
US-A- 3 428 719
CHEMICAL ABSTRACTS, Band 79, Nr. 10, 19. November 1973, Seite 160, Nr. 117970p, COLUM-
BUS,OHIO,(US)
CHEMICAL ABSTRACTS, Band 85, Nr. 24, 13. Dezember 1976, Seite 253, Nr. 181446y, COLUM-
BUS,OHIO,(US)

(73) Patentinhaber : Hutschenreuther AG

D-8672 Selb (DE)

(72) Erfinder : Müller-Zell, Axel, Dr.
Plössberger Weg 14
D-8672 Selb (DE)
Erfinder : Hahn, Christoph, Dr.
Bei der Linde 20
D-8672 Selb (DE)

(74) Vertreter : Czowalla, Ernst et al
Patentanwälte E. Czowalla P. Matschkur Dr.-Kurt-
Schumacher-Strasse 23 Postfach 9109
D-8500 Nürnberg11 (DE)

## Beschreibung

Die Erfindung richtet sich auf ein Verfahren zum Herstellen von SiC-Fasern und aus solchen Fasern bestehenden Fasergebilden aus SiO$_2$-Fasern und kohlenstoffhaltigen Verbindungen unter hohen Temperaturen.

Die moderne Technik stellt, insbesondere für spezielle Einsatzgebiete der Werkstoffe, ständig steigende Forderungen an die Qualitätseigenschaften der Werkstoffe. Hierbei nehmen Verbundwerkstoffe mit einer aus Fasern bestehenden Verstärkungsphase aufgrund ihrer in vielerlei Hinsicht hervorstechenden Eigenschaften eine wachsende Bedeutung ein. So wurden beispielsweise mit SiC-Fasern verstärkte Kunststoffe und Verbundwerkstoffe auf der Basis Aluminium-SiC-Faser in bestimmten technischen Bereichen bereits angewandt. SiC-Fasern können aber auch zur Verstärkung von Kunststoffen sowie von keramischen Werkstoffen eingesetzt werden z. B. in der Glaskeramik und in Form von gesintertem SiC z. B. in Form eines Verbundwerkstoffs aus SiC und faserverstärktem SiC.

SiC weist eine hohe Beständigkeit gegen Thermoschock auf, es hat eine beachtliche mechanische Festigkeit und besitzt einen hohen E-Modul. Darüber hinaus ist es besonders widerstandsfähig gegen Heißgaskorrosionen und den Angriff aggressiver Chemikalien. Solche Werkstoffe eignen sich bevorzugt auch als Isoliermaterial, insbesondere zur Anwendung unter hohen Temperaturen bis in Größenordnungen von 2 000°.

In der einschlägigen Literatur sind verschiedene Verfahren zur Herstellung von Fasern bekannt. Beim sogenannten Blasverfahren erstarren die aus der Schmelze gezogenen Fasern auf einer Platte, und es entstehen Stapelfasern. Beim Verdüssen werden die Schmelzfäden nach dem Austritt aus der Düse in einem kalten Gasstrom gekühlt. Aus vergleichsweise dicken Drähten kann man auf mechanische Weise dünne Fasern ziehen, während man Fasern von sehr geringem Durchmesser (sogenannte Whisker) nach chemischen Verfahren herstellt. All diese verschiedenen Verfahren erfordern aufwendige Vorrichtungen und sind daher teuer.

In einer Veröffentlichung von Gruber (BMFT-FB T 79-175) wird die kontinuierliche Herstellung von SiC-Fasern beschrieben. Dieses Verfahren beruht auf der pyrolytischen Abscheidung des Materials aus der Gasphase auf einem beheizten Trägerdraht aus Wolfram.

Die DE-A-26 47 862 offenbart ein Verfahren zur Herstellung eines Komposits aus durchgehenden kontinuierlichen Fasern und metallischen Silicium. Dabei werden die Hohlräume eines Stapels aus SiC-Fasern mit geschmolzenem metallischem Silicium gefüllt. Die kontinuierlichen SiC-Fasern entstehen hierbei hauptsächlich aus einer hochmolekularen organischen Silicium-Verbindung durch Verspinnen und anschließendes Brennen.

Ein anderes Verfahren geht aus DE-A-30 45 523 hervor. Hiernach werden Kohlenstoff-Fasern bei einer Temperatur unterhalb 1 500 °C in geschmolzenes Silicium getaucht und dadurch eine Umwandlung der C-Fasern in SiC erzielt unter gleichzeitiger Bildung eines Silicium/SiC-Komposits.

Alle diese Verfahren leiden unter dem Nachteil des zu ihrer Durchführung erforderlichen hohen Aufwands, weshalb sie sich in der Praxis bislang nicht durchsetzen konnten. Die Herstellung der Kohlenstoff-Fasern ist kompliziert. Die Herstellungskosten liegen hoch, und die Fasern sind großporig und mit restlichem amorphen Kohlenstoff besetzt. Diese Erscheinung führt zu Inhomogenitäten der Fasern und damit zu ungleichmäßigen, insgesamt aber verminderten Festigkeitseigenschaften.

Die Literatur beschreibt darüber hinaus verschiedene Verfahren zur Herstellung von kristallinem SiC. Nach dem Massenherstellungsverfahren nach Acheson gewinnt man im allgemeinen polykristallines, stückiges Material.

Nach der AT-A-213 846 wird SiC über chemische Reaktionen unter hohen Temperaturen aus siliciumhaltigen und kohlenstoffhaltigen Verbindungen in kristalliner Form hergestellt. Diese Verbindungen werden dann thermisch zersetzt und das SiC dabei auf einem erhitzten Träger abgelagert. Nach einem Verfahren gemäß GB-A-10 15 844 gewinnt man drahtförmige Kristalle mit Querschnitten in der Größenordnung von Mikron aus Kohlenstoff und SiO$_2$ bei Temperaturen zwischen 1375 und 1 500 °C in einer Wasserstoff-Stickstoff-Atmosphäre bei vermindertem Druck.

Die JP-A-7348720 beschreibt die Herstellung von SiC-Fasern für die feuerfeste Anwendung oder einen Isolierwerkstoff. Diese SiC-Fasern sollen durch Beschichtung von Fasern, die hauptsächlich SiO$_2$ enthalten, mit Kohlenstoff gewonnen werden. Die anschließende Temperaturbehandlung erfolgt bei 1 300 bis 2 000 °C in nichtoxidierender Atmosphäre. Die hieraus resultierenden SiC-Fasern sind anscheinend grau bis schwarz. Sie sind vergleichsweise spröde und vom β-SiC-Typ.

Schließlich sind Verfahren bekannt zur Herstellung von SiC-Kristallen, -Whiskern und -Fasern, die aber mit dem Nachteil der Nichtreproduzierbarkeit der SiC-Struktur behaftet sind und wiederum unter der Inhomogenität der Verfahrenserzeugnisse leiden. Darüber hinaus sind auch diese Verfahren außerordentlich kostspielig.

Aufgabe der Erfindung ist die Herstellung von SiC-Fasern bzw. SiC-Fasermaterialien der verschiedensten Art, die sich durch hohe Homogenität ihrer Struktur und infolge dessen verbesserten Eigenschaften auszeichnen. Diese Fasern sollen bei größtmöglicher Einheitlichkeit ihrer Struktur und Zusamensetzung in reproduzierbarer Weise hergestellt werden und zwar unter dem besonderen Aspekt der Minderung der Herstellungskosten. Die Erfindung löst dieses Problem in der Weise, daß sie die SiO$_2$-Fasern in einem Bad aus einer in einem organischen Lösungsmittel gelösten C-haltigen und carbonisierbaren Verbindung tränkt, anschließend trocknet, danach die überzogenen Fasern einem Pyrolyseverfahren unterzieht und schließlich unter Temperaturen 2 000 °C in einer Schutzgasatmosphäre das SiO$_2$ zu SiC umsetzt.

Von den Ausgangspunkten gewinnt man SiO$_2$-Fasern aus Kieselglas und Kieselgut in Form von Einzelfasern oder Geweben oder anderen Gebilden durch seit langem bekannte, technisch ausgereifte und bewährte Verfahren. Dieser Werkstoff ist am Markt zu günstigen Preisen erhältlich. Das weitere Ausgangsmaterial, die kohlenstoffhaltige carbonisierbare organische Verbindung, ist in einem Lösungsmittel löslich oder liegt selbst in flüssiger Form vor. Bevorzugt finden Phenol-Resol-Harze der verschiedensten Form Verwendung.

Nach dem erfindungsgemäßen Verfahren werden diese Ausgangsstoffe durch Tränken der SiO$_2$-Fasern in dem Flüssigkeitsbad in engsten Kontakt gebracht, so daß die Fasern von einer haftenden Umhüllung durch das C-haltige Material umschlossen sind. Die getrockneten Fasern werden anschließend einer Pyrolyse unterzogen, die im allgemeinen bei Temperaturen ab 1 200 °C vorsichtig eingeleitet wird und zu einer weitgehenden Freisetzung des Kohlenstoffs führt, der bei der nachfolgenden Temperaturbehandlung oberhalb etwa 2 000 °C reagiert unter Bildung der SiC-Fasern.

Es hat sich als besonders vorteilhaft erwiesen, Reaktionsbeschleuniger in dem Tränkbad zuzusetzen. Hierfür bieten sich die Metalle Bor, Titan, Zirkon und Vanadin bevorzugt an, die zweckmäßig als organische Verbindungen in gelöster Form eingebracht werden. Sie verteilen sich in dieser Form gleichmäßig in dem Tränkbad, was die Umsetzung der Ausgangsprodukte zur Erzielung möglichst homogener SiC-Fasern begünstigt. Es ist schließlich wesentlich vorteilhafter, bei Raumtemperatur zu arbeiten und SiO$_2$-Fasermaterial mit einer kalten Lösung zu tränken, als andererseits ein Graphitgewebe mit geschmolzenen Silicium zu infiltrieren.

Man muß damit rechnen, daß das Verfahrensprodukt Reste an freiem Kohlenstoff aufweist, der in Hinblick auf die gewünschte Homogenität des Produktes und spätere Anwendungen als störend empfungen werden kann. Um dies zu vermeiden und das Verfahrensprodukt zu verbessern, sieht die Erfindung in ihrer weiteren Ausgestaltung vor, daß die SiC-Fasern zur Beseitigung von restlichem freiem Kohlenstoff in einer Sauerstoff- oder einer CO$_2$-Atmosphäre geglüht werden. Dieses Verfahren erfolgt in der Regel bei Temperaturen von 1 200 °C und darüber. Eine andere Alternative sieht die Erfindung in der Weise vor, daß die SiC-Fasern zur Beseitigung von restlichem freiem Kohlenstoff in einer Silicium-Atmosphäre geglüht werden. Welchem Verfahren hierbei der Vorzug gegeben wird, richtet sich ganz nach den Umständen des Einzelfalls.

Vorteilhaft erfolgt die Temperaturbehandlung im Anschluß an das Pyrolyseverfahren in einer Atmosphäre von Inertgas und Wasserstoff, wobei z. B. hohe Heliumanteile überwiegen und bis zu 95 % betragen können.

Der Vorzug dieses Verfahrens ist die bestechende technologische Einfachheit der zur Erzeugung der SiC-Fasern anzuwendenden Verfahrensschritte und die dadurch herbeigeführte bedeutende Kostenminderung gegenüber den vorbekannten Verfahren.

Das erfindungsgemäße Verfahren wird im folgenden anhand einiger Beispiele erläutert :

Beispiel 1

Eine aus Kieselglas hergestellte Faser wird kontinuierlich durch ein mittelviskoses Bad von Phenol-Resol-Harz gezogen und dabei mit dem kohlenstoffhaltigen Stoff gleichmäßig und fest haftend überzogen. Nach dem Durchlaufen des Tränkbades durchläuft die Faser eine Trocknungszone von ca. 130 °C. Hier verfestigt sich der äußerlich haftende Belag auf der Faser. Darauf wird die Faser einer Pyrolyse unterzogen, die sich bei Temperaturen von ca. 1 200 °C, gegebenenfalls auch darüber, vollzieht. Im Anschluß daran wird die Faser einer Temperaturbehandlung bei oberhalb 2 000 °C in einer helium- und wasserstoffhaltigen Atmosphäre ausgesetzt.

Wahlweise kann die Faser dann in einer CO$_2$-Atmosphäre geglüht werden. Man erhält so die praktisch reine SiC-Faser.

Beispiel 2

Ein Fasergewebe aus Kieselglas wird in ein Bad eingebracht und darin getränkt, welches ein in Aceton gelöstes Phenol-Resol-Harz und eine gelöste borhaltige organische Verbindung enthält. Bei der anschließenden Trocknung wird das Aceton verflüchtigt und damit das kohlenstoff- und borhaltige Überzugsmaterial fest auf der Faseroberfläche gebunden. Darauf wird das Fasermaterial nacheinander der Pyrolyse und einer Temperaturbehandlung in einem Inertgas oder Gasgemisch unterzogen.

Die so gebildeten SiC-Fasern werden in Anschluß daran in einer Siliciumatmosphäre geglüht, wobei der freie Rest-Kohlenstoff mit Silicium zu SiC reagiert, was zu einer zusätzlichen Verkettung und Homogenisierung des gewonnenen Verfahrensprodukts führt. Diese Faser ist nach dem beschriebenen Verfahren reproduzierbar aus reinem β-SiC herstellbar.

**Patentansprüche**

1. Verfahren zum Herstellen von SiC-Fasern und aus solchen Fasern bestehenden Fasergebilden aus SiO$_2$-Fasern und kohlenstoffhaltigen Verbindungen unter hohen Temperaturen, dadurch gekennzeichnet, daß die SiO$_2$-Fasern in einem Bad aus einer in einem organischen Lösungsmittel gelösten C-haltigen und carbonisierbaren Verbindung getränkt, anschließend getrocknet und danach die überzogenen Fasern einem Pyrolyseverfahren unterzogen werden und anschließend unter Temperaturen > 2 000 °C in einer Schutzgasatmosphäre das $SiO_2$ zu $SiC$ umgesetzt werden.

2. Verfahren nach Anspruch 1, dadurch gekennzeichnet, daß dem Tränkbad als Reaktonsbeschleuniger wahlweise Bor und/oder Titan und-/oder Zirkon und/oder Vanadin oder deren Verbindungen zugesetzt werden.

3. Verfahren nach Anspruch 2, dadurch gekennzeichnet, daß der Reaktionsbeschleuniger als lösliche organische Verbindung verwendet wird.

4. Verfahren nach einem der Ansprüche 1 bis 3, dadurch gekennzeichnet, daß die Temperaturbehandlung im Anschluß an das Pyrolyseverfahren in einer inertgas- und wasserstoffhaltigen Atmosphäre vorgenommen wird.

5. Verfahren nach einem der Ansprüche 1 bis 4, dadurch gekennzeichnet, daß die SiC-Fasern zur Beseitigung von restlichen freien C in einer Sauerstoff- oder einer $CO_2$-Atmosphäre geglüht werden.

6. Verfahren nach einem der Ansprüche 1 bis 4, dadurch gekennzeichnet, daß die SiC-Fasern zur Beseitigung von restlichem freien C in einer Si-Atmosphäre geglüht werden.

7. Verfahren nach einem der Ansprüche 1 bis 6, dadurch gekennzeichnet, daß die $SiO_2$-Fasern aus Kieselglas oder Kieselgut bestehen.

8. Verfahren nach einem der Ansprüche 1 bis 7, dadurch gekennzeichnet, daß die $SiO_2$-Fasern als Einzelfasern oder in Form von Fasergeflecht, Fasermatten, Fasergeweben, Faserwolle vorliegen.

9. Verfahren nach einem der Ansprüche 1 bis 8, dadurch gekennzeichnet, daß das Tränkbad ein kohlenstoffhaltiges carbonisierbares organisches Material enthält.

## Claims

1. A method of producing SiC fibres and fibrous structures consisting of such fibres from $SiO_2$ fibres and carbonaceous compounds under high temperatures, characterised in that the $SiO_2$ fibres are impregnated in a bath of a carbonaceous and carbonizable compound dissolved in an inorganic solvent, subsequently dried and then the coated fibres are subjected to a pyrolysis process after which the $SiO_2$ is converted into SiC in an atmosphere of protective gas at temperatures > 2 000 °C.

2. A method as claimed in Claim 1, characterised in that boron and/or titanium and/or zirconium and/or vanadium or their compounds are selectively added to the impregnating bath as reaction accelerators.

3. A method as claimed in Claim 2, characterised in that the reaction accelerator is used in the form of a soluble organic compound.

4. A method as claimed in one of the Claims 1 to 3, characterised in that the temperature treatment following on the pyrolysis process is carried out in an atmosphere containing inert gas and hydrogen.

5. A method as claimed in one of the Claims 1 to 4, characterised in that the SiC fibres are roasted in an atmosphere of oxygen or $CO_2$ to remove residual free C.

6. A method as claimed in one of the claims 1 to 4, characterised in that the SiC fibres are roasted in an Si atmosphere to eliminate residual free C.

7. A method as claimed in one of the Claims 1 to 6, characterized in that the $SiO_2$ fibres consist of vitreous silica or translucent fused quartz.

8. A method as claimed in one of the Claims 1 to 7, characterised in that the $SiO_2$ fibres are present in the form of individual fibres or in the form of fibre netting, fibre matting, fibrous tissue or fibre wool.

9. A method as claimed in one of the claims 1 to 8, characterised in that the impregnating bath contains a carbonizable organic material containing carbon.

## Revendications

1. Procédé de fabrication de fibres en SiC et produits fibreux consistant en de telles fibres, à partir de fibres de $SiO_2$ et de combinaisons renfermant du carbone, à de hautes températures, caractérisé par le fait que les fibres de $SiO_2$ sont imprégnées dans un bain se composant d'une combinaison carbonisable, renfermant du C et dissoute dans un solvant organique, ensuite de quoi elles sont séchées, puis les fibres revêtues sont soumises à un procédé pyrolytique, après quoi le $SiO_2$ est converti en du SiC dans une atmosphère gazeuse protectrice, à des températures > 2 000 °C.

2. Procédé selon la revendication 1, caractérisé par le fait qu'on ajoute sélectivement au bain d'imprégnation, en tant qu'accélérateur de réaction, du bore et/ou du titane et/ou du zirconium et/ou du vanadium, ou des combinaisons de ces derniers.

3. Procédé selon la revendication 2, caractérisé par le fait que l'accélérateur de réaction est employé en tant que combinaison organique soluble.

4. Procédé selon l'une des revendications 1 à 3, caractérisé par le fait qu'on procède au traitement thermique dans la continuité du procédé pyrolytique, dans une atmosphère renfermant un gaz inerte et de l'hydrogène.

5. Procédé selon l'une des revendications 1 à 4, caractérisé par le fait que les fibres de SiC sont portées à incandescence, en vue de l'élimination du C libre résiduel, dans une atmosphère d'oxygène ou de $CO_2$.

6. Procédé selon l'une des revendications 1 à 4, caractérisé par le fait que les fibres de SiC sont portées à l'incandescence, en vue de l'élimination du C libre résiduel, dans une atmosphère de Si.

7. Procédé selon l'une des revendications 1 à 6, caractérisé par le fait que les fibres de $SiO_2$ consistent en du quartz fondu ou en du quartz fondu translucide.

8. Procédé selon l'une des revendications 1 à 7, caractérisé par le fait que les fibres de $SiO_2$ se présentent sous la forme de fibres individuelles, ou bien sous la forme d'un tressage de fibres, de nappes de fibres, de tissus de fibres ou de laine de fibres.

9. Procédé selon l'une des revendications 1 à 8, caractérisé par le fait que la bain d'imprégnation contient une substance organique carbonisable renfermant du carbone.